# EUROPÄISCHE PATENTSCHRIFT

(11) **EP 0 449 194 B1**
(45) Veröffentlichungstag und Bekanntmachung des Hinweises auf die Patenterteilung: **18.05.1994**
(21) Anmeldenummer: 91104744.7
(22) Anmeldetag: 26.03.1991
(51) Int. Cl.: F16B 7/14

(54) **Verriegelungsvorrichtung für die stufenlose Verstellung von teleskopartig geführten Rohren**
Latching device with continuous adjustment for telescopically guided tubes
Dispositif de verrouillage avec réglage continu pour des tubes guidés télescopiquement

(30) Priorität: 30.03.1990 DE 9003700 U
(43) Veröffentlichungstag der Anmeldung: 02.10.1991
(73) Patentinhaber: Kies, Günther, D-58739 Wickede (DE); Sommer, Siegfried, D-59757 Arnsberg (DE)
(72) Erfinder: Kies, Günther, D-58739 Wickede (DE); Sommer, Siegfried, D-59757 Arnsberg (DE)
(74) Vertreter: Schirmer, Siegfried, Dipl.-Ing.

(56) Entgegenhaltungen:
- EP-A- 0 317 661
- DE-A- 2 617 313
- FR-A- 936 014
- FR-A- 2 163 986
- FR-A- 2 606 923
- US-A- 3 284 114
- US-A- 4 757 778

## Beschreibung

Die Erfindung betrifft eine Verriegelungsvorrichtung nach dem Oberbegriff des Anspruchs 1.

Zur Festlegung der jeweiligen Lage der stufenlos verstellbaren Teleskoprohre sind verschiedene Verriegelungsvorrichtungen bekannt. Diese Verriegelungsvorrichtungen sind im allgemeinen entsprechend dem vorgesehenen Einsatzgebiet der Teleskoprohre nur gering belastbar und stehen oft störend aus dem Bereich der Teleskoprohre hervor, z.B. bei Verwendung eines Exzenterhebels.

Aus der US-A-3 284 114 ist ein Teleskopgestänge für eine Astsäge o. ä. Vorrichtungen bekannt, die zur Überbrückung einer großen Distanz zwischen der Bedienperson und dem eigentlichen Ort der Handlung dient. Das untere, im Durchmesser größere Teleskoprohr ist an seinem Ende mit einer Buchse versehen, deren oberer Teil ein Außengewinde aufweist und deren unterer Teil mit einem ringförmigen Anschlag fest auf dem unteren Teleskoprohr sitzt. Am oberen Ende der Buchse befindet sich eine innere ringförmige Schräge, an die sich eine kurze, parallel zur Rohrachse verlaufende Ringfläche anschließt. Die Überwurfmutter ist ebenfalls mit einer Schräge, an die sich eine gerade, kurze Ringfläche anschließt, versehen. Die abgeschrägten Flächen bilden eine Ringkammer unterschiedlicher Länge, aber immer gleichen Durchmessers, zum Aufnehmen eines Klemmringes. Dieser Klemmring, aus dem ein Stück herausgeschnitten ist, ist wendelförmig verdrallt. Wenn nun die Überwurfmutter auf die Buchse gedreht wird, wird der Klemmring axial und radial zusammengedrückt und auf die Außenfläche des Innenrohres gepreßt. Der Klemmring ist elastisch und dehnt sich aus, sobald die Überwurfmutter wieder gelöst wird.

Der in der DE-A-2 617 313 beschriebene Klemmring, der unmittelbar an dem äußeren Teleskoprohr verklemmbar ist, wird durch die konischen Flächen der Feststellschraube an der Stirnseite des Außenrohrs zusammengepreßt und verkeilt, wobei die konischen Flächen an dem Klemmring nur an dessen Enden vorgesehen sind.

Der Erfindung liegt die Aufgabe zugrunde, eine Verriegelungsvorrichtung der aufgezeigten Gattung so auszubilden, daß bei einfacher und schneller Handhabung größere Kräfte übertragbar sind.

Diese Aufgabe wird erfindungsgemäß dadurch gelöst, daß das ringförmige Klemmelement als langgestreckte Spannhülse ausgebildet ist, deren Außenwandung von der Mittelumfangslinie zu beiden Stirnseiten konisch verjüngend verläuft und die bis annähernd zur Mittelumfangslinie in das Gegenaufnahmestück einsetzbar ist, wobei die konische Innenfläche der Überwurfmutter vor deren Stirnseite in einem ringförmigen Anschlag endet. Zweckmäßige Ausgestaltungen der Erfindung sind in den Unteransprüchen aufgezeigt.

Durch die erfindungsgemäße Ausbildung wird eine definierte Reibungskraft zwischen der Spannhülse und dem beweglichen Rohr erzeugt, wobei ein leichtes Lösen der Verbindung möglich ist. Durch das dosierte Aufbringen der Reibungskraft ist für den Verstellvorgang kein vollständiges Lösen der Verriegelung erforderlich.

Ein Ausführungsbeispiel der Erfindung ist in der Zeichnung dargestellt und wird nachfolgend näher beschrieben. Es zeigen:

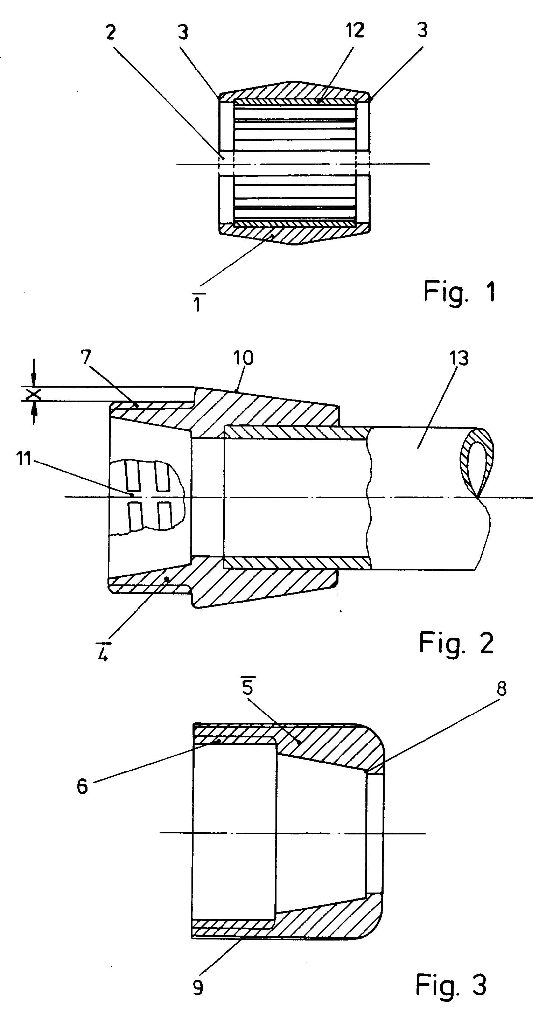

- Fig. 1: einen Vertikalschnitt durch eine Spannhülse;
- Fig. 2: einen Vertikalschnitt durch ein Gegenaufnahmestück;
- Fig. 3: einen Vertikalschnitt durch eine Überwurfmutter und

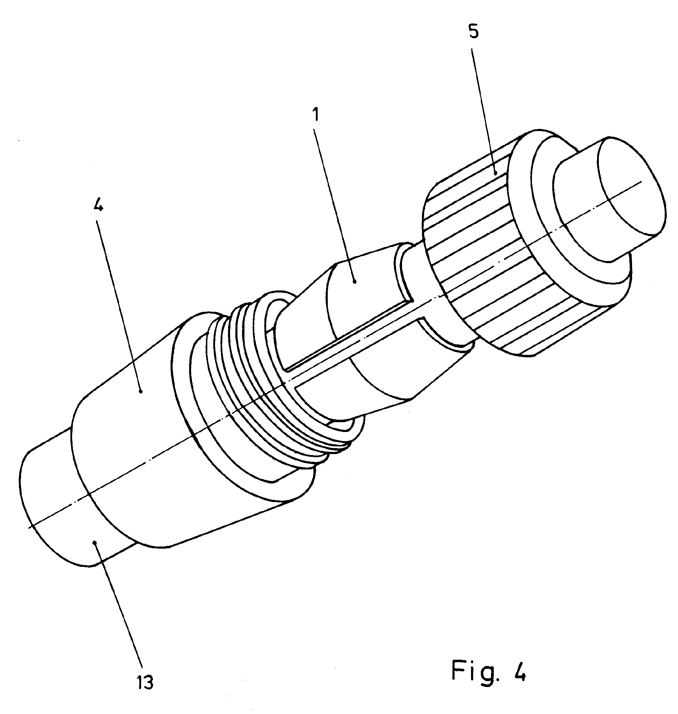

- Fig. 4: eine isometrische Darstellung einer an zwei teleskopartig geführten Rohren angeordneten Verriegelungsvorrichtung vor dem Aufschrauben der Überwurfmutter.

Die mit einem Längsschlitz 2 versehene Spannhülse 1 ist in das fest am Ende eines Rohres 13 angeordnete Gegenaufnahmestück 4 eingesetzt. Die Außenwandung der Spannhülse 1 verläuft von der Mittelumfangslinie zu den beiden Stirnseiten 3 der Spannhülse 1 konisch verjüngend, wobei die Spannhülse 1 annähernd bis zur Mittelumfangslinie in das Gegenaufnahmestück 4 eingesetzt ist. Die Überwurfmutter 5 ist mit einem Innengewinde 6 und das Gegenaufnahmestück 4 mit einem entsprechenden Außengewinde 7 versehen. Die Innenwandungen des Gegenaufnahmestücks 4 und der Überwurfmutter 5 sind entsprechend der Außenwandung der Spannhülse 1 konisch verlaufend ausgebildet. Die konische Innenfläche der Überwurfmutter 5 verläuft vom Ende des Innengewindes 6 bis nahe zur Stirnseite. Da das Innengewinde 6 der Überwurfmutter 5 dem Außengewinde 7 des Gegenaufnahmestücks 4 entspricht und die Spannhülse 1 annähernd bis zu ihrer Mittelumfangslinie in das Gegenaufnahmestück 4 einsetzbar ist, ergibt sich daraus, daß die Länge der konischen Innenfläche der Überwurfmutter 5 zuzüglich der Länge des Innengewindes 6 annähernd der Länge der Spannhülse 1 entspricht. Am Ende der konisch verlaufenden Innenfläche der Überwurfmutter 5 ist ein ringförmiger Anschlag 8 angeordnet.

Zur besseren Handhabung sind auf der Außenfläche der Überwurfmutter 5 Profilierungen 9 angeordnet, die im Ausführungsbeispiel durch parallel in Längsrichtung verlaufende Vertiefungen gebildet sind. Das Außengewinde 7 weist gegenüber der Außenwandung 10 des Gegenaufnahmestücks 4 einen geringeren Durchmesser auf, wobei die Differenz x dieser beiden Durchmesser der Stärke der Wandung der Überwurfmutter 5 im Bereich des Innengewindes 6 entspricht, so daß die Außenflächen des Gegenaufnahmestücks 4 und der Überwurfmutter 5 in Funktionsstellung der Verriegelungsvorrichtung bündig ineinander übergehen.

Die Spannhülse 1, das Gegenaufnahmestück 4 und die Überwurfmutter 5 sind im Spritzgießverfahren aus Kunststoff hergestellt. Das Außengewinde 7 des Gegenaufnahmestücks 4 ist mit einer Durchbrechung 11 in Form eines durchgehenden Schlitzes versehen. Auf der Innenseite der Spannhülse 1 ist ein rutschfester elastischer Belag 12 aufgespritzt, der im geringen Abstand von den beiderseitigen Stirnseiten der Spannhülse 1 endet.

Die erfindungsgemäße Verriegelungsvorrichtung kann überall da zum Einsatz kommen, wo zur Anpassung an den bestimmten Verwendungszweck eine stufenlose Längenveränderung zweckmäßig ist, z. B. bei Sonnenschirmen, Tischen, Staubsaugern. Besonders vorteilhaft ist die Verwendung für die stufenlose Arretierung des Gabelbaums von Surfbrettern.

### Aufstellung der Bezugszeichen:

- 1: Spannhülse
- 2: Längsschlitz in 1
- 3: Stirnseiten von 1
- 4: Gegenaufnahmestück
- 5: Überwurfmutter
- 6: Innengewinde der 5
- 7: Außengewinde des 4
- 8: ringförmiger Anschlag in 5
- 9: Profilierungen der 5
- 10: Außenwandung
- 11: Durchbrechung im 7
- 12: rutschfester Belag
- 13: Rohr
- x: Differenz der Durchmesser vom 7 und der 10

## Patentansprüche

1. Verriegelungsvorrichtung für die stufenlose Verstellung von teleskopartig geführten Rohren mit einem am Ende eines Rohres (13) fest angeordneten Gegenaufnahmestück (4) mit Außengewinde (7) und konisch verlaufender Innenwandung, einer Überwurfmutter (5) mit konisch verlaufender Innenwandung und einem Innengewinde (6) sowie einem zwischen der Überwurfmutter (5) und dem Gegenaufnahmestück (4) angeordneten, elastischen, längsgeschlitzten, ringförmigen Klemmelement (1) mit konisch verlaufenden Seitenflächen, dadurch gekennzeichnet, daß das ringförmige Klemmelement als langgestreckte Spannhülse (1) ausgegebildet ist, deren Außenwandung von der Mittelumfangslinie zu beiden Stirnseiten (3) konisch verjüngend verläuft und die bis annähernd zur Mittelumfangslinie in das Gegenaufnahmestück (4) einsetzbar ist, und daß die konische Innenfläche der Überwurfmutter (5) vor deren Stirnseite in einem ringförmigen Anschlag (8) endet.

2. Verriegelungsvorrichtung nach Anspruch 1, dadurch gekennzeichnet, daß die Innenwandungen des Gegenaufnahmestückes (4) und der Überwurfmutter (5) entsprechend der Außenwandung der Spannhülse (1) konisch verlaufen.

3. Verriegelungsvorrichtung nach Anspruch 1 oder 2, dadurch gekennzeichnet, daß die in das Gegenaufnahmestück (4) bis annähernd zur Mittelumfangslinie einschiebbare Spannhülse (1) mit einem Anschlag im Gegenaufnahmestück (4) korrespondiert.

4. Verriegelungsvorrichtung nach einem der Ansprüche 1 bis 3, dadurch gekennzeichnet, daß der Überwurfmutter (5) am Ende des Gewindes des Gegenaufnahmestücks (4) ein Anschlag zugeordnet ist.

5. Verriegelungsvorrichtung nach einem der Ansprüche 1 bis 4, dadurch gekennzeichnet, daß die Außenfläche der Überwurfmutter (5) mit Profilierungen (9) versehen ist.

6. Verriegelungsvorrichtung nach Anspruch 5, dadurch gekennzeichnet, daß die Profilierungen (9) durch parallel in Längsrichtung der Überwurfmutter (5) verlaufende Vertiefungen gebildet sind.

7. Verriegelungsvorrichtung nach einem der Ansprüche 1 bis 6, dadurch gekennzeichnet, daß das Außengewinde (7) gegenüber der Außenwandung (10) des Gegenaufnahmestücks (4) einen geringeren Durchmesser aufweist.

8. Verriegelungsvorrichtung nach Anspruch 7, dadurch gekenzeichnet, daß die Differenz (x) der Durchmesser des Außengewindes (7) und der Außenwandung (10) der Stärke der Wandung der Überwurfmutter (5) im Bereich des Innengewindes (6) entspricht, so daß die Außenflächen des Gegenaufnahmestücks (4) und der Überwurfmutter (5) in Funktionsstellung bündig ineinander übergehen.

9. Verriegelungsvorrichtung nach einem der Ansprüche 1 bis 8, dadurch gekennzeichnet, daß die Spannhülse (1), das Gegenaufnahmestück (4) und die Überwurfmutter (5) aus Kunststoff gebildet sind.

10. Verriegelungsvorrichtung nach einem der Ansprüche 1 bis 9, dadurch gekennzeichnet, daß die Spannhülse (1), das Gegenaufnahmestück (4) und die Überwurfmutter (5) im Spritzgießverfahren hergestellt sind.

11. Verriegelungsvorrichtung nach einem der Ansprüche 1 bis 10, dadurch gekennzeichnet, daß das Außengewinde (7) des Gegenaufnahmestücks (4) mit mindestens einer Durchbrechung (11) versehen ist.

12. Verriegelungsvorrichtung nach Anspruch 11, dadurch gekennzeichnet, daß durch die Durchbrechung (11) das Außengewinde (7) unterbrochen ist.

13. Verriegelungsvorrichtung nach Anspruch 11 oder 12, dadurch gekennzeichnet, daß die Durchbrechung (11) die Form eines über das Außengewinde (7) verlaufenden Schlitzes aufweist.

14. Verriegelungsvorrichtung nach einem der Ansprüche 1 bis 13, dadurch gekennzeichnet, daß das Gegenaufnahmestück (4) aus einem Material gebildet ist, das gegenüber dem Material der Überwurfmutter (5) gering- fügig weicher ist.

15. Verriegelungsvorrichtung nach einem der Ansprüche **1** bis 14, dadurch gekennzeichnet, daß auf der Innenseite der Spannhülse (1) ein rutschfester Belag (12) angeordnet ist.

16. Verriegelungsvorrichtung nach Anspruch 15, dadurch gekenzeichnet, daß der rutschfeste Belag (12) angespritzt ist.

17. Verriegelungsvorrichtung nach Anspruch 15, dadurch gekennzeichnet, daß der rutschfeste Belag (12) durch ein separat einlegbares Element gebildet ist.

18. Verriegelungsvorrichtung nach einem der Ansprüche 15 bis 17, dadurch gekenzeichnet, daß der rutschfeste Belag (12) aus einem elastischen Material gebildet ist.

19. Verriegelungsvorrichtung nach einem der Ansprüche 15 bis 18, dadurch gekennzeichnet, daß der rutschfeste Belag (12) mit Profilierungen versehen ist.

20. Verriegelungsvorrichtung nach einem der Ansprüche 15 bis 19, dadurch gekennzeichnet, daß der rutschfeste Belag (12) im geringen Abstand von den beiderseitigen Stirnseiten der Spannhülse (1) endet.

## Claims

1. Locking device for the stepless adjustment of telescopically guided tubes, comprising a socket member (4), which is fixedly arranged at the end of a tube (13), with an external thread (7) and a conically extending inner wall, a box nut (5) with a conically extending inner wall and an internal thread (6) as well as a resilient, longitudinally slotted annular clamping element (1), which is arranged between the box nut (5) and the socket member (4), with conically extending side surfaces, characterised thereby that the annular clamping element is constructed as an elongate clamping sleeve (1), the outer wall of which extends conically narrowing from the centre circumferential line to both end faces (3) and which is insertable into the socket member (4) up to approximately the centre circumferential line, and that the conical inner surface of the box nut (5) ends ahead of the end face thereof in an annular abutment (8).

2. Locking device according to claim 1, characterised thereby that the inner walls of the socket member (4) and of the box nut (5) extend conically in correspondence with the outer wall of the clamping sleeve (1).

3. Locking device according to claim 1 or 2, characterised thereby that the clamping sleeve (1) pushable into the socket member (4) up to approximately the centre circumferential line corresponds with an abutment in the socket member (4).

4. Locking device according to one of claims 1 to 3, characterised thereby that an abutment is associated with the box nut (5) at the end of the thread of the socket member (4).

5. Locking device according to one of claims 1 to 4, characterised thereby that the outer surface of the box nut (5) is provided with profiles (9).

6. Locking device according to claim 5, characterised thereby that the profiles (9) are formed by recesses extending in longitudinal direction of the box nut (5).

7. Locking device according to one of claims 1 to 6, characterised thereby that the external thread (7) has a smaller diameter compared with the outer wall (10) of the socket member (4).

8. Locking device according to claim 7, characterised thereby that the difference (x) of the diameters of the external thread (7) and the outer wall (10) corresponds to the thickness of the wall of the box nut (5) in the region of the internal thread (6), so that the outer surfaces of the socket member (4) and the box nut (5) go over flushly into one another in functional setting.

9. Locking device according to one of claims 1 to 8, characterised thereby that the clamping sleeve (1), the socket member (4) and the box nut (5) are formed from synthetic material.

10. Locking device according to one of claims 1 to 9, characterised thereby that the clamping sleeve (1), the socket member (4) and the box nut (5) are produced in the injection moulding process.

11. Locking device according to one of claims 1 to 10, characterised thereby that the outer thread (7) of the socket member (4) is provided with at least one perforation (11).

12. Locking device according to claim 11, characterised thereby that the external thread (7) is interrupted by the perforation (11).

13. Locking device according to claim 11 or 12, characterised thereby that the perforation (11) has the form of a slot extending over the external thread (7).

14. Locking device according to one of claims 1 to 13, characterised thereby that the socket member (4) is formed from a material which is slightly softer compared with the material of the box nut (5).

15. Locking device according to one of claims 1 to 14, characterised thereby that a non-slip coating (12) is arranged on the inner side of the clamping sleeve (1).

16. Locking device according to claim 15, characterised thereby that the non-slip coating (12) is sprayed on.

17. Locking device according to claim 15, characterised thereby that the non-slip coating (12) is formed by a separately insertable element.

18. Locking device according to one of claims 15 to 17, characterised thereby that the non-slip coating (12) is formed from a resilient material.

19. Locking device according to one of claims 15 to 18, characterised thereby that the non-slip coating (12) is provided with profiles.

20. Locking device according to one of claims 15 to 19, characterised thereby that the non-slip coating (12) ends at a small spacing from end faces of the clamping sleeve (1) at both ends thereof.

## Revendications

1. Dispositif de verrouillage pour un réglage en continu de tubes emmanchés de manière télescopique, avec une contre-pièce (4) fixée solidairement à un tube (13), cette pièce étant munie d'un filetage extérieur, (7) et d'une paroi intérieure conique, un écrou-chapeau (5) à paroi intérieure conique et filetage intérieur (6) ainsi qu'un élément de serrage (1), annulaire, fendu longitudinalement, élastique, prévu entre l'écrou-chapeau (5) et la contre-pièce (4), caractérisé en ce que l'élément de serrage annulaire est un manchon de serrage (11), allongé, dont la paroi extérieure diminue suivant une forme conique de sa périphérie médiane jusque vers ses deux faces latérales (3) et qui peut se loger dans la contre-pièce (4) pratiquement jusqu'à sa ligne périphérique médiane, la surface intérieure conique de l'écrou-chapeau (5) se terminant avant sa face frontale par une butée annulaire (8).

2. Dispositif de verrouillage selon la revendication 1, caractérisé en ce que la paroi intérieure de la contre-pièce (4) et de l'écrou-chapeau (5) ont une conicité correspondant à la paroi extérieure du manchon de serrage.

3. Dispositif de verrouillage selon la revendication 1 ou 2, caractérisé en ce que le manchon de serrage (1), qui se glisse dans la contre-pièce (4) jusque pratiquement au niveau de la ligne périphérique médiane, correspond à une butée dans la contre-pièce (4).

4. Dispositif de verrouillage selon l'une des revendications 1 à 3, caractérisé en ce qu'à l'écrou-chapeau (5) est associée une butée à l'extrémité du filetage de la contre-pièce (4).

5. Dispositif de verrouillage selon l'une des revendications 1 à 4, caractérisé en ce que la surface extérieure de l'écrou-chapeau (5) est munie d'un profilage (9).

6. Dispositif de verrouillage selon la revendication 5, caractérisé en ce que le profilage (9) est constitué par des rainures parallèles à la direction longitudinale de l'écrou-chapeau (5).

7. Dispositif de verrouillage selon l'une des revendications 1 à 6, caractérisé en ce que le filetage extérieur (7) a un diamètre inférieur à la paroi extérieure (10) de la contre-pièce (4).

8. Dispositif de verrouillage selon la revendication 7, caractérisé en ce que la différence (x) de diamètre entre le filetage extérieur (7) et la paroi extérieure (10) correspond à l'épaisseur de la paroi de l'écrou-chapeau (5) au niveau du filetage intérieur (6) si bien que la surface extérieure de la contre-pièce (4) et de l'écrou-chapeau (5) se rejoignent suivant la même surface en position de fonctionnement.

9. Dispositif de verrouillage selon l'une des revendications 1 à 8, caractérisé en ce que le manchon de serrage (1), la contre-pièce (4) et l'écrou-chapeau (5) sont en matière plastique.

10. Dispositif de verrouillage selon l'une des revendications 1 à 9, caractérisé en ce que le manchon de serrage (1), la contre-pièce (4) et l'écrou-chapeau (5) sont fabriqués par injection.

11. Dispositif de verrouillage selon l'une des revendications 1 à 10, caractérisé en ce que le filetage extérieur (7) de la contre-pièce (4) est muni d'au moins d'une découpure (11).

12. Dispositif de verrouillage selon la revendication 11, caractérisé en ce que la découpure (11) coupe le filetage extérieur (7).

13. Dispositif de verrouillage selon la revendication 11 ou 12, caractérisé en ce que la découpure (11) a la forme d'une fente traversant le filetage extérieur (7).

14. Dispositif de verrouillage selon l'une des revendications 1 à 13, caractérisé en ce que la contre-pièce (4) est réalisée dans une matière légèrement moins dure que celle de l'écrou-chapeau (5).

15. Dispositif de verrouillage selon l'une des revendications 1 à 14, caractérisé par un revêtement anti-dérapant (12) sur la face intérieure du manchon de serrage (1).

16. Dispositif de verrouillage selon la revendication 15, caractérisé en ce que le revêtement anti-dérapant (12) est appliqué par projection.

17. Dispositif de verrouillage selon la revendication 15, caractérisé en ce que le revêtement anti-dérapant (12) est constitué par un élément inséré séparément.

18. Dispositif de verrouillage selon l'une des revendications 15 à 17, caractérisé en ce que le revêtement anti-dérapant (12) est en une matière élastique.

19. Dispositif de verrouillage selon l'une des revendications 15 à 18, caractérisé en ce que le revêtement anti-dérapant (12) est muni de profilages.

20. Dispositif de verrouillage selon l'une des revendications 15 à 19, caractérisé en ce que le revêtement anti-dérapant (12) se termine à une faible distance des deux faces frontales du manchon de serrage (1).
